# EUROPEAN PATENT APPLICATION

(11) **EP 3 557 520 A1**
(43) Date of publication of application: **23.10.2019**
(21) Application number: 17887832.8
(22) Date of filing: 13.10.2017
(51) Int. Cl.: G06T 1/20

(54) **WINDOW RENDERING METHOD AND TERMINAL**

(30) Priority: 30.12.2016 CN 201611265865
(71) Applicant: Huawei Technologies Co., Ltd., Longgang District Shenzhen, Guangdong 518129 (CN)
(72) Inventor: NING, Yuesong, Shenzhen Guangdong 518129 (CN); WAN, Chengzhen, Shenzhen Guangdong 518129 (CN)
(74) Representative: Gill Jennings & Every LLP
(86) International application number: PCT/CN2017/106106
(87) International publication number: WO 2018/120992

(57) **Abstract**

This application relates to the graphics rendering field, and in particular, to window rendering technologies of a terminal. A window rendering method includes: obtaining information about windows, where the windows include at least one first window and at least one second window of a same application; determining the first window or the second window according to the information about the windows; and rendering content of the second window according to first resolution, and rendering content of the first window according to second resolution, where the second resolution is different from original system resolution, and the first resolution is different from the second resolution. According to the solution provided in this application, content of a primary window can be rendered by using flexible resolution, and compatibility for displaying a secondary window can be improved.

## Description

This application claims priority to Chinese Patent Application No. 201611265865.6, filed with the Chinese Patent Office on December 30, 2016 and entitled "WINDOW RENDERING METHOD AND TERMINAL", which is incorporated herein by reference in its entirety.

### TECHNICAL FIELD

This application relates to the graphics rendering field, and in particular, to window rendering technologies.

### BACKGROUND

With development of display technologies, a display screen with high resolution is increasingly widely used in various terminals. However, an operation amount for rendering and displaying is increased due to increasing of the high resolution, and consequently system resources and power consumption are increased. Therefore, in some scenarios, to reduce occupation of the system resources and reduce power consumption, some applications are rendered according to resolution less than original system resolution. Generally, logic resolution is lowered during a specific time period or during running of a specific application, so as to reduce power consumption and reduce rendering calculation. The original system resolution is default resolution used by an operating system in rendering a window.

In some other display technologies, to refine details in rendering and improve display quality of an image, rendering is performed by using resolution greater than the original system resolution. For example, when a 3D image is rendered, rendering is performed by using resolution greater than the original system resolution, and then the 3D image is scaled to the original system resolution, so that an aliasing effect of a polygon generated in rendering the 3D image can be reduced, and a display effect can be improved.

It can be learned that, in existing rendering technologies, rendering is performed by using resolution that is different from the original system resolution. However, when rendering is performed by using resolution that is different from the original system resolution, a compatibility problem usually occurs due to window design and the like, and as a result, user experience is poor.

### SUMMARY

The present invention provides a window rendering method and apparatus, and a terminal device, so that a primary window can be flexibly displayed, and compatibility for displaying a secondary window can be improved.

According to an aspect, an embodiment of the present invention provides a window rendering method, and the method includes: obtaining information about windows, where the windows include at least one first window and at least one second window of a same application; and determining the first window or the second window according to the information about the windows; and rendering content of the second window according to first resolution, and rendering content of the first window according to second resolution, where the second resolution is different from original system resolution, the first resolution is different from the second resolution, and the original system resolution is default resolution used by an operating system in rendering a window.

In a possible implementation, the information about the windows includes types of a plurality of windows of the application and a heritage relationship of the plurality of windows; the at least one first window of the application is determined according to the types of the plurality of windows and the heritage relationship of the plurality of windows; and content of another window of the application other than the first window is rendered according to the first resolution, and the content of the first window is rendered according to the second resolution, where the second resolution is different from the original system resolution, and the first resolution is different from the second resolution. Therefore, the first window can be more accurately identified according to the types of the windows and the heritage relationship.

In a specific implementation of the implementation, a specific type of a window is first identified according to a titlename of the window. The first window of the application is identified according to a parent-child relationship between windows. If an activity window of an application has an inheritance child surfaceview window, the first window is the child surfaceview window.

In a possible implementation, the first resolution is closer to the original system resolution than the second resolution. In this case, because the first resolution is closer to the original system resolution, compatibility of the first resolution is higher than that of the second resolution, so that compatibility for rendering the second window can be better.

In a possible implementation, the first resolution is the original system resolution. In this case, the second window is rendered by using the original system resolution, so that compatibility for displaying the second window is improved.

In a possible implementation, the second resolution is less than the original system resolution. In this case, the first window is rendered by using resolution less than the original system resolution, so that occupation of system resources and system power consumption for rendering the first window can be reduced.

According to another aspect, an embodiment of the present invention provides another window rendering method, and the method includes: obtaining information about windows, where the information about the windows includes identification information of at least one preset secondary window of an application; and according to the information about the windows, rendering content of the secondary window according to first resolution, and rendering content of another window of the application other than the secondary window according to second resolution, where the second resolution is different from original system resolution, the first resolution is different from the second resolution, and the original system resolution is default resolution used by an operating system in rendering a window.

In a possible implementation, the first resolution is closer to the original system resolution than the second resolution. In this case, because the first resolution is closer to the original system resolution, compatibility of the first resolution is higher than that of the second resolution, so that compatibility for rendering the secondary window can be better.

In a possible implementation, the first resolution is the original system resolution. In this case, the secondary window is rendered according to the original system resolution, so that compatibility for displaying the secondary window is improved.

In a possible implementation, the second resolution is less than the original system resolution. In this case, a primary window is rendered by using resolution less than the original system resolution, so that occupation of system resources and system power consumption for rendering the primary window can be reduced.

According to another aspect, an embodiment of the present invention provides another window rendering method, and the method includes: obtaining information about windows, where the information about the windows includes identification information of at least one preset primary window of an application; and rendering content of another window of the application other than the primary window according to first resolution, and rendering content of the primary window according to second resolution, where the second resolution is different from original system resolution, the first resolution is different from the second resolution, and the original system resolution is default resolution used by an operating system in rendering a window.

In a possible implementation, the first resolution is closer to the original system resolution than the second resolution. In this case, because the first resolution is closer to the original system resolution, compatibility of the first resolution is higher than that of the second resolution, so that compatibility for rendering a secondary window can be better.

In a possible implementation, the first resolution is the original system resolution. In this case, a secondary window is rendered according to the original system resolution, so that compatibility for displaying the secondary window is improved.

In a possible implementation, the second resolution is less than the original system resolution. In this case, the primary window is rendered by using resolution less than the original system resolution, so that occupation of system resources and system power consumption for rendering the primary window can be reduced.

In an implementation, when a to-be-rendered window is not the primary window, the window is rendered according to the original system resolution. A non-primary window is rendered by using the original system resolution, so that compatibility is improved.

According to still another aspect, an embodiment of the present invention provides a window rendering apparatus, where the apparatus includes logical functional units, so as to implement the method in the foregoing implementations.

In an implementation, the apparatus includes an input unit and a rendering unit, and optionally, a processing unit, configured to perform the methods in the foregoing aspects and the steps in the specific implementations of the methods.

In a possible implementation, the input unit is configured to obtain information about windows, where the windows include at least one first window and at least one second window of a same application. The rendering unit is configured to: determine the first window or the second window according to the information about the windows; and render content of the second window according to first resolution, and render content of the first window according to second resolution, where the second resolution is different from original system resolution, the first resolution is different from the second resolution, and the original system resolution is default resolution used by an operating system in rendering a window.

In a possible implementation, the information about the windows includes types of a plurality of windows of the application and a heritage relationship of the plurality of windows. The processing unit is configured to determine the at least one first window of the application according to the types of the plurality of windows and the heritage relationship of the plurality of windows. The rendering unit is configured to: render content of another window of the application other than the first window according to the first resolution, and render the content of the first window according to the second resolution, where the second resolution is different from the original system resolution, and the first resolution is different from the second resolution. Therefore, the first window can be more accurately identified according to the types of the windows and the heritage relationship.

In another implementation, the input unit is configured to obtain information about windows, where the information about the windows includes identification information of at least one preset secondary window of an application; and the rendering unit is configured to: according to the information about the windows, render content of the secondary window according to first resolution, and render content of another window of the application other than the secondary window according to second resolution, where the second resolution is different from original system resolution, the first resolution is different from the second resolution, and the original system resolution is default resolution used by an operating system in rendering a window.

In another implementation, the input unit is configured to obtain information about windows, where the information about the windows includes identification information of at least one preset primary window of an application; and the rendering unit is configured to: render content of another window of the application other than the primary window according to first resolution, and render content of the primary window according to second resolution, where the second resolution is different from original system resolution, the first resolution is different from the second resolution, and the original system resolution is default resolution used by an operating system in rendering a window.

In an implementation, the apparatus may further include the processing unit, configured to determine, according to the information about the to-be-rendered windows, whether the to-be-rendered window is a primary window or a secondary window.

In a specific implementation of the implementation, when determining, according to the information about the to-be-rendered windows, whether the to-be-rendered window is the primary window or the secondary window, the processing unit is specifically configured to: determine a type of each window in the to-be-rendered windows according to the information about the to-be-rendered windows; and determine the primary window according to a heritage relationship of the windows, and determine another window other than the primary window as the secondary window.

In an implementation, the first resolution is closer to the original system resolution than the second resolution. Optionally, the first resolution is the original system resolution. Optionally, the second resolution is less than the original system resolution.

According to still another aspect, an embodiment of the present invention provides a terminal, including a display device, a rendering device, and a storage device, where the rendering device is configured to read an instruction or data stored in the storage device, so as to execute the methods in the foregoing aspects or the specific implementations of the aspects, and the display device is configured to display content that is rendered by the rendering device.

According to yet another aspect, an embodiment of the present invention provides a computer storage medium, configured to store a computer software instruction used by the foregoing terminal. The computer software instruction includes a program designed for executing the foregoing aspects.

According to the method embodiments, when the primary window is rendered by using the more flexible second resolution, the secondary window can be rendered by using the first resolution with better compatibility, so that occupation of system resources and power consumption are reduced (when the second resolution is less than the original system resolution) or rendering precision is improved (when the second resolution is greater than the original system resolution), and compatibility for displaying the secondary window is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other implementations from these accompanying drawings without creative efforts. All the embodiments or implementations shall fall within the protection scope of the present invention.
FIG. 1A and FIG. 1B are a schematic structural diagram of a system of a possible execution environment according to the present invention;
FIG. 2 is a flowchart of a method according to an embodiment of the present invention;
FIG. 3 is a flowchart of a method according to another embodiment of the present invention;
FIG. 4 is a flowchart of a method according to another embodiment of the present invention;
FIG. 5 is a schematic diagram of a logical structure of an apparatus according to an embodiment of the present invention; and
FIG. 6 is a schematic diagram of a hardware structure of an apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

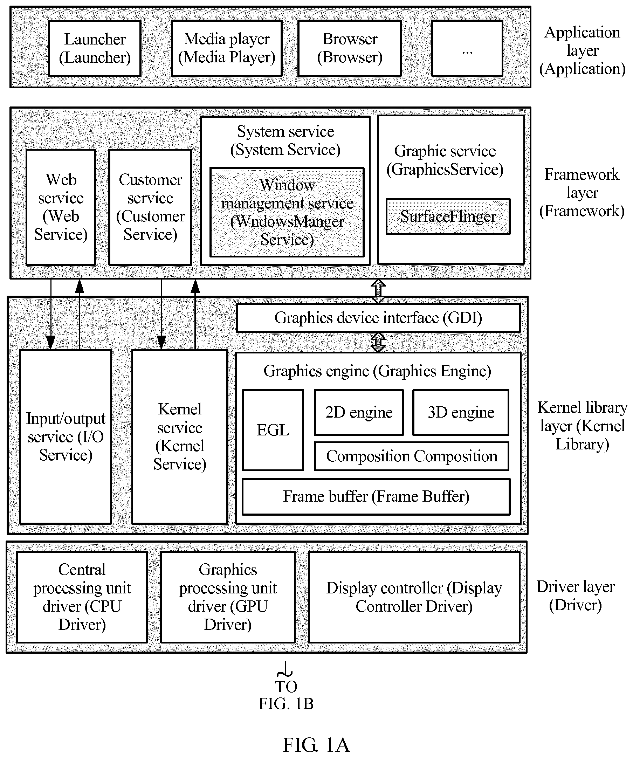

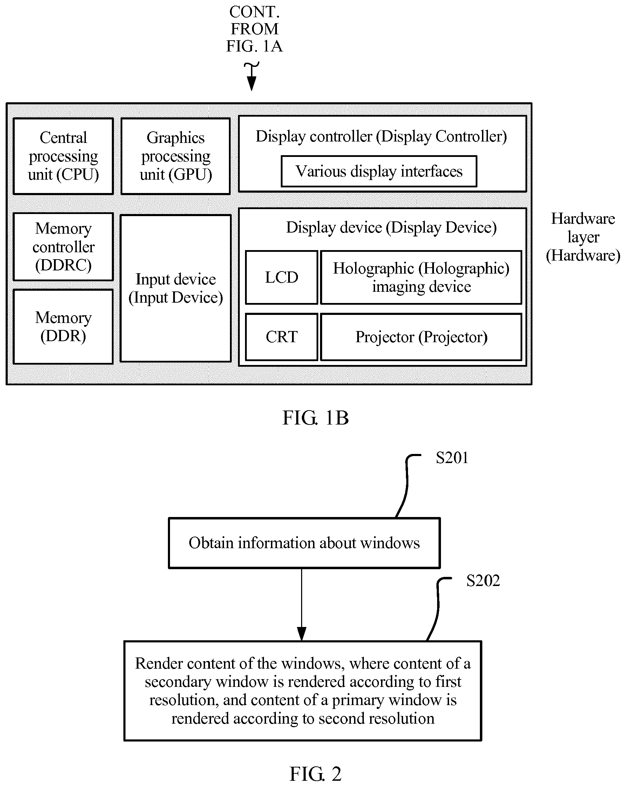

FIG. 1A and FIG. 1B are used as an example to describe a logical structure of a terminal that executes a window rendering method according to an embodiment of the present invention. The terminal may be specifically a smartphone. As shown in FIG. 1A and FIG. 1B, a hardware layer of the terminal device includes a CPU, a GPU, and the like, and certainly may further include a storage, an input/output device, a memory, a memory controller, a network interface, and the like. The input device may include a keyboard, a mouse, a touchscreen, and the like, and the output device may include a display device, such as an LCD, a CRT, a holographic (Holographic) imaging device, a projector (Projector), and the like. An operating system (such as Android) and some application programs may run at the hardware layer. A kernel library is a core part of the operating system, and includes an input/output service, a kernel service, a graphics device interface, a graphics engine (Graphics Engine) that implements graphics processing of the CPU and the GPU, and the like. The graphics engine may include a 2D engine, a 3D engine, a composition (Composition), a frame buffer (Frame Buffer), an EGL, and the like. In addition, the terminal further includes a driver layer, a framework layer, and an application layer. The driver layer may include a CPU driver, a GPU driver, a display controller driver, and the like. The framework layer may include a graphic service (Graphic Service), a system service (System service), a web service (Web Service), a customer service (Customer Service), and the like. The graphic service may include a widget (Widget), a canvas (Canvas), a view (Views), a render script, and the like. The application layer may include a launcher (launcher), a media player (Media Player), a browser (Browser), and the like.

In this embodiment of the present invention, with reference to the scenario in FIG. 1A and FIG. 1B, rendering of a window is implemented by using a window management service (WindowsMangerService) in the system service and a surfaceflinger service in the graphic service.

To facilitate understanding of content in the embodiments of the present invention, the following first describes important terms in the present invention.

Primary window: A primary window is a window that is used to display a homepage of a game or an application. For example, in an Android system, if a primary activity (activity) window of an application has no corresponding child surfaceview (surfaceview) window, a primary image window of the application is the primary activity window; or if a primary activity window of an application has an inheritance child surfaceview window, a surfaceview window is used in the application, and a primary image window of the application is the child surfaceview window.

Secondary window: All other windows other than the primary window may be secondary windows. In existing displaying of an application, the secondary window is usually displayed on the primary window in an overlapping manner, so as to display additional information. For example, a new window or a third-party secondary program window is displayed in an overlapping manner in a mobile phone game; or another information window is displayed in an overlapping manner in a video player; or the like. Because these new windows are generally designed based on original system resolution, when these windows are rendered by using resolution that is different from the original system resolution, various display errors easily occur in these new windows due to incompatible resolution. In some specific implementations of this embodiment, the secondary window is limited to a marked window other than the primary window. In this case, the secondary window is specifically a window, other than the primary window, that may have a compatibility problem.

In some embodiments of the present invention, to facilitate implementation of an actual program, the primary window and the secondary window are distinguished by using a first window and a second window. The first window is corresponding to the primary window, and the second window is corresponding to the secondary window in the foregoing embodiment.

With reference to FIG. 2, FIG. 2 is a flowchart of a method according to an embodiment of the present invention. This embodiment includes the following steps.

S201. Obtain information about windows.

The window is a window displayed in an application or a game. The information about the windows includes information that is used for identifying whether a window is a primary window, such as titlenames (titlename) of the windows, a heritage relationship of the windows, identifiers of the windows, or types of the windows.

The windows include at least one primary window and at least one secondary window. The obtaining information about windows may be: obtaining a plurality of windows that include the primary window and the secondary window at a time, and performing rendering according to subsequent steps; or obtaining information about windows at many times, that is, obtaining information about one or more windows each time, and performing processing according to subsequent steps each time the information about the window is obtained.

S202. Render content of the windows, where content of the secondary window is rendered according to first resolution, and content of the primary window is rendered according to second resolution.

The primary window and the secondary window in the windows can be determined according to the obtained information about the windows. In a possible implementation, a type of each window in the windows is first determined according to the information about the windows, then the primary window is determined according to the heritage relationship of the windows, and another window other than the primary window is used as the secondary window. For example, in an Android system, when a corresponding window state is created for each window, a specific type of the window is first identified according to a titlename titlename of the window. Further, a primary image window of an application may be identified according to a parent-child relationship between windows. If a primary activity window of an application has no corresponding child surfaceview window, a primary image window of the application is the primary activity window; or if a primary activity window of an application has an inheritance child surfaceview window, a surfaceview window is used in the application, and a primary image window of the application is the child surfaceview window.

In another possible implementation, the information about the windows includes a mark of the secondary window, and the secondary window may be identified according to the mark of the secondary window, so that a window that is not marked is used as the primary window.

In another possible implementation, the information about the windows includes a mark of the primary window, and the primary window may be identified according to the mark of the primary window, so that a window that is not marked is used as the secondary window.

The content of the primary window is rendered according to the second resolution, and the second resolution is different from original system resolution. Generally, the original system resolution is set according to a display device of a terminal device, and is adapted to the display device. When an application in a system runs, rendering is performed by default according to the original system resolution. In this embodiment of the present invention, the primary window is rendered according to the second resolution, so that processing is more flexible. In some implementations, when rendering is performed according to resolution less than the original system resolution, consumption of system resources can be reduced, and system power consumption can be reduced. In other implementations, when rendering is performed according to resolution greater than the original system resolution, image rendering precision can be improved, and details of a graphic can be refined (for example, if a 3D image is rendered according to resolution greater than the original system resolution, and then is drawn according to the original system resolution, an aliasing effect can be effectively reduced.

The content of the secondary window is rendered according to the first resolution, and the first resolution is different from the second resolution. That is, the content of the secondary window is rendered by using resolution that is different from the resolution used in rendering the content of the primary window. Because the second resolution is different from the original system resolution, and the secondary window generally is not designed based on the second resolution, if the secondary window is rendered according to the second resolution, a compatibility problem easily occurs. Therefore, the secondary window is rendered according to the first resolution that is different from the second resolution, so that the compatibility problem is relieved.

The first resolution may be resolution whose compatibility is better than that of the second resolution in terms of rendering the secondary window. In an implementation, the second resolution is closer to the original resolution than the first resolution, so that compatibility of the second resolution is better than that of the first resolution. In another implementation, the first resolution may be the original system resolution, so that compatibility of the first resolution is better.

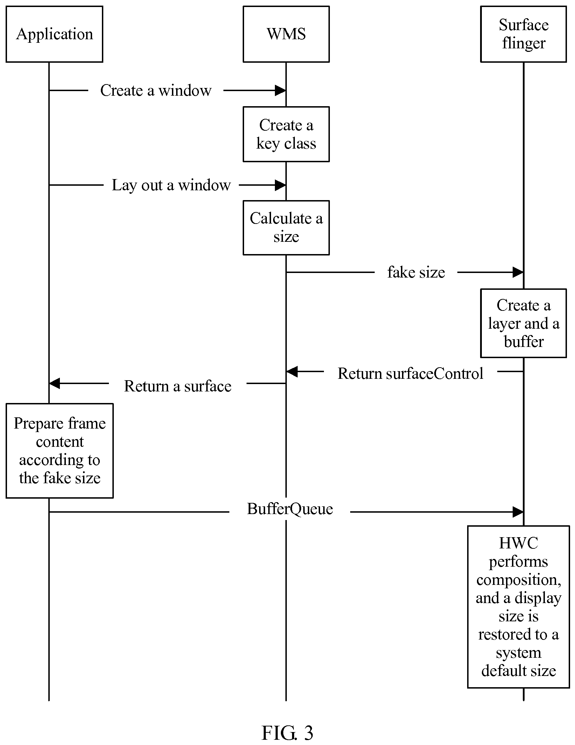

When the first resolution or the second resolution is different from the original resolution, a manner of rendering a window corresponding to the first resolution or the second resolution may be different from a manner of rendering the window according to the original system resolution. For example, as shown in FIG. 3, in an Android system, an embodiment of the present invention provides a possible method for rendering a window by using non-original system resolution (that is, a fake size).
1. An application applies to a WMS for creating a window. The WMS creates a key class such as windowstate or windowstateanimate for each window, and adds the class to a window manager WindowsManager for management in a centralized manner. In this case, the class has no size of a window.
2. During layout, a process of calculating a size of a window is triggered. When calculating the size, the WMS calculates the size according to non-original system resolution, to obtain a non-default size in the system, that is, a fake size.
3. The fake size is transmitted to the surfaceflinger, so that the surfaceflinger creates, according to the fake size, a layer and a buffer corresponding to the window.
4. A surface control is returned to the WMS, and a surface is returned to the application, so that the fake size of to-be-displayed content is transmitted to the application. Then, the application prepares the to-be-displayed content according to the fake size.
5. The application prepares content of one frame according to the fake size, and adds the content to the BufferQueue, and the content is transmitted to the SurfaceFlinger and is composed in a centralized manner.
6. The SurfaceFlinger submits information in the BufferQueue to an HWC for composition, and then the information is sent and displayed. In the process, a display size is restored to a system default size.

According to the foregoing steps, the content of one frame that is prepared according to the fake size is displayed according to the system default size, so that content that is rendered by using the non-original system resolution is displayed.

According to this method embodiment, when the primary window is rendered by using the more flexible second resolution, the secondary window can be rendered by using the first resolution with better compatibility, so that occupation of system resources and power consumption are reduced (when the second resolution is less than the original system resolution) or rendering precision is improved (when the second resolution is greater than the original system resolution), and compatibility for displaying the secondary window is improved.

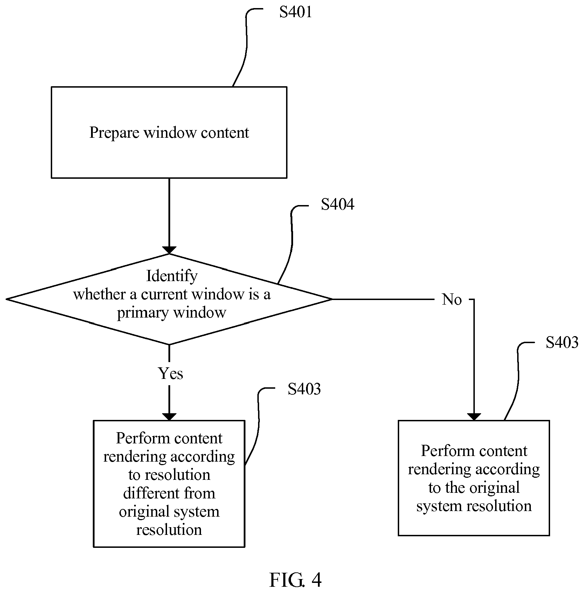

With reference to FIG. 4, FIG. 4 is a flowchart of a method according to another embodiment of the present invention. In this embodiment, an Android system is used as an example, and a window rendering method is provided. The method includes the following steps.

S401. Prepare window content.

The window content is managed by using a WMS. When a window is added to an application, the WMS creates a corresponding window state (WindowState) for the window.

S402. Identify whether a current window is a primary window.

In the Android system, an application includes a plurality of windows, such as a primary activity window and a child surfaceview window. When the WMS creates a corresponding window state for each window, a specific type of the window is first identified according to a titlename of the window. Further, a primary image window of the application is identified according to a parent-child relationship between windows. If a primary activity window of an application has no corresponding child surfaceview window, a primary image window of the application is the primary activity window; or if a primary activity window of an application has an inheritance child surfaceview window, a surfaceview window is used in the application, and a primary image window of the application is the child surfaceview window.

S403. If the current window is the primary window, perform content rendering according to resolution different from original system resolution.

S404. If the current window is not the primary window, perform content rendering according to the original system resolution.

For a specific rendering manner, refer to the rendering method described in the foregoing embodiment.

In this embodiment, rendering is performed according to the resolution that is different from the original system resolution when it is determined that the current window is the primary window; and rendering is performed according to the original system resolution when the current window is not the primary window. Therefore, occupation of system resources and power consumption are reduced (when second resolution is less than the original system resolution) or rendering precision is improved (when second resolution is greater than the original system resolution), and compatibility for displaying a non-primary window is improved.

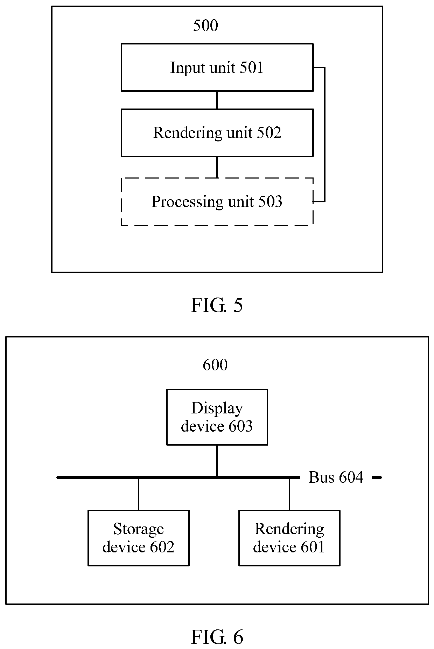

FIG. 5 is a schematic diagram of a logical structure of a window rendering apparatus 500 according to an embodiment of the present invention. The window rendering apparatus 500 may include an input unit 501 and a rendering unit 502. The apparatus in this embodiment is configured to execute the methods described in the foregoing two embodiments. Therefore, the foregoing descriptions and explanations may be used to understand the apparatus in this embodiment. In this embodiment, with reference to the execution environment in FIG. 1A and FIG. 1B, a logic unit in this embodiment is implemented by using a system service and a graphic service at a framework layer. In a possible implementation,
the input unit 501 is configured to obtain information about to-be-rendered windows.

The to-be-rendered windows include at least one primary window and at least one secondary window.

The rendering unit 502 is configured to: render content of the secondary window according to first resolution, and render content of the primary window according to second resolution, where the second resolution is different from original system resolution, and the first resolution is different from the second resolution.

Optionally, the apparatus may further include a processing unit 503, configured to determine, according to the information about the to-be-rendered windows, whether the to-be-rendered window is the primary window or the secondary window.

Further, in an implementation, when determining, according to the information about the to-be-rendered windows, whether the to-be-rendered window is the primary window or the secondary window, the processing unit 503 is specifically configured to: determine a type of each window in the to-be-rendered windows according to the information about the to-be-rendered windows; and determine the primary window according to a heritage relationship of the windows, and determine another window other than the primary window as the secondary window.

In another implementation, the information about the windows includes a mark of the secondary window, and the mark of the secondary window is used to identify that a to-be-rendered window is the secondary window. The processing unit 503 is further specifically configured to: determine the secondary window according to the mark of the secondary window, and determine, as the primary window, a to-be-rendered window that is not the secondary window.

In an implementation, the first resolution is closer to the original system resolution than the second resolution. Optionally, the first resolution is the original system resolution. Optionally, the second resolution is less than the original system resolution.

Based on the window rendering apparatus in this embodiment, an effect of the method in the foregoing embodiment can be implemented, and details are not described herein.

As shown in FIG. 6, FIG. 6 is a schematic structural diagram of a terminal device 600 according to an embodiment of the present invention. The terminal device 600 may include a rendering device 601, a storage device 602, a display device 603, and a bus 604 connecting the devices. In addition, the terminal device may further include the central processing unit, the graphics processing unit, the display controller, the memory controller, the input device, and the like in FIG. 1A and FIG. 1B.

The rendering device 601 may be an independent processing apparatus, or may be integrated into another processor, or another processor executes a function of the rendering device and serves as the rendering device. For example, in a common smartphone terminal, the rendering device 601 is usually implemented by using the graphics processing unit GPU. In this case, the rendering device 601 is the graphics processing unit GPU.

The storage 602 may include a read-only memory and a random access memory, and directly or indirectly provide an instruction and data for the rendering device 601. For example, in an implementation, the rendering device 601 may directly read the instruction and the data in the storage 602, to implement the function of the rendering device 601. In another implementation, another processor reads and processes the instruction or the data in the storage 602, and then sends the instruction and the data to the rendering device 601 to instruct the rendering device 601 to implement a corresponding function. A part of the storage 602 may further include a nonvolatile random access memory (NVRAM).

In addition, the storage 602 further stores the following elements: an executable module or a data structure, a subset thereof, or an extended set thereof:
an application program, including various application programs, such as the launcher (launcher), the media player (Media Player), and the browser (Browser) shown in FIG. 1A and FIG. 1B, and configured to implement various application services; and
an operating system, including various system programs, such as the framework layer, the kernel library layer, and the driver layer shown in FIG. 1A and FIG. 1B, and configured to: implement various basic services, and process a hardware-based task.

In this embodiment of the present invention, the rendering device 601 invokes the instruction or the data stored in the storage 603, to execute the method of S201 and S202, or the method of S402, S403, and S404 in the foregoing method embodiments, so as to implement an effect of the foregoing method.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A window rendering method, wherein the method comprises:
obtaining information about windows, wherein the windows comprise at least one first window and at least one second window of a same application; and
determining the first window or the second window according to the information about the windows; and rendering content of the second window according to first resolution, and rendering content of the first window according to second resolution, wherein the second resolution is different from original system resolution, the first resolution is different from the second resolution, and the original system resolution is default resolution used by an operating system in rendering a window.

2. The method according to claim 1, wherein
the information about the windows comprises types of a plurality of windows of the application and a heritage relationship of the plurality of windows;
the determining the first window or the second window according to the information about the windows specifically comprises: determining the at least one first window of the application according to the types of the plurality of windows and the heritage relationship of the plurality of windows; and
the rendering content of the second window according to first resolution, and rendering content of the first window according to second resolution specifically comprises: rendering content of another window of the application other than the first window according to the first resolution, and rendering the content of the first window according to the second resolution, wherein the second resolution is different from the original system resolution, and the first resolution is different from the second resolution.

3. The method according to claim 1, wherein the first resolution is closer to the original system resolution than the second resolution.

4. The method according to claim 1 or 2, wherein the first resolution is the original system resolution.

5. A window rendering method, wherein the method comprises:
obtaining information about windows, wherein the information about the windows comprises identification information of at least one preset secondary window of an application; and
according to the information about the windows, rendering content of the secondary window according to first resolution, and rendering content of another window of the application other than the secondary window according to second resolution, wherein the second resolution is different from original system resolution, the first resolution is different from the second resolution, and the original system resolution is default resolution used by an operating system in rendering a window.

6. A window rendering apparatus, wherein the apparatus comprises:
an input unit, configured to obtain information about windows, wherein the windows comprise at least one first window and at least one second window of a same application; and
a rendering unit, configured to: determine the first window or the second window according to the information about the windows; and render content of the second window according to first resolution, and render content of the first window according to second resolution, wherein the second resolution is different from original system resolution, the first resolution is different from the second resolution, and the original system resolution is default resolution used by an operating system in rendering a window.

7. The apparatus according to claim 6, wherein the information about the windows comprises types of a plurality of windows of the application and a heritage relationship of the plurality of windows;
the apparatus further comprises a processing unit, configured to determine the at least one first window of the application according to the types of the plurality of windows and the heritage relationship of the plurality of windows; and
the rendering unit is specifically configured to: render content of another window of the application other than the first window according to the first resolution, and render the content of the first window according to the second resolution, wherein the second resolution is different from the original system resolution, and the first resolution is different from the second resolution.

8. The apparatus according to claim 6 or 7, wherein the first resolution is closer to the original system resolution than the second resolution.

9. The apparatus according to claim 8, wherein the first resolution is the original system resolution.

10. A window rendering apparatus, wherein the apparatus comprises:
an input unit, configured to obtain information about windows, wherein the information about the windows comprises identification information of at least one preset secondary window of an application; and
a rendering unit, configured to: according to the information about the windows, render content of the secondary window according to first resolution, and render content of another window of the application other than the secondary window according to second resolution, wherein the second resolution is different from original system resolution, the first resolution is different from the second resolution, and the original system resolution is default resolution used by an operating system in rendering a window.

11. A terminal, wherein the terminal comprises a display device, a rendering device, and a storage device;
the rendering device is configured to read an instruction or data stored in the storage device, so as to execute the method according to any one of claims 1 to 5; and
the display device is configured to display content that is rendered by the rendering device.
